# EUROPÄISCHE PATENTSCHRIFT

(11) **EP 2 832 580 B1**
(45) Veröffentlichungstag und Bekanntmachung des Hinweises auf die Patenterteilung: **21.12.2016**
(21) Anmeldenummer: 14177310.1
(22) Anmeldetag: 16.07.2014
(51) Int. Cl.: B60L 15/20, B60L 11/18, B60L 15/08, B62D 59/04

(54) **Antriebssystem für einen Fahrzeuganhängerrangierantrieb**
Drive system for a vehicle trailer shunting drive
Système d'entraînement pour un entraînement de man'uvre de remorque de véhicule

(30) Priorität: 01.08.2013 DE 102013108258
(43) Veröffentlichungstag der Anmeldung: 04.02.2015
(73) Patentinhaber: Truma Gerätetechnik GmbH & Co. KG, 85640 Putzbrunn (DE)
(72) Erfinder: Thiel, Stefan, 83022 Rosenheim (DE)
(74) Vertreter: Prinz & Partner mbB

(56) Entgegenhaltungen:
- EP-A1- 1 790 555
- EP-A2- 0 895 346
- EP-A2- 1 225 090
- DE-U1-202009 005 524

## Beschreibung

Die Erfindung betrifft ein Antriebssystem für einen Fahrzeuganhängerrangierantrieb, mit zumindest einer Motoreinheit und einer Spannungsquelle zur Versorgung der Motoreinheit, wobei die Motoreinheit einen bürstenbehafteten elektrischen Motor mit Motorwelle und eine Motorsteuerung umfasst, welche eine Drehzahlerfassungseinheit zum Erfassen der Drehzahl der Motorwelle und eine Steuer- und Regeleinheit für den Motor aufweist, insbesondere für dessen Spannungsversorgung, wobei die Motorsteuerung einen PWM-Generator umfasst, sodass die von der Spannungsquelle abgegebene Spannung über ein PWM-Signal geregelt ist.

Rangier- bzw. Hilfsantriebe, die es ermöglichen, auch ohne Zugmaschine einen Anhänger mit Motorunterstützung zu verschieben bzw. zu drehen, sind aus dem Stand der Technik bekannt. Sie weisen Antriebssysteme auf, welche eine Antriebsrolle antreiben, die mit einem Rad des Anhängers zusammenwirkt, um den Anhänger zu verfahren. Die aus dem Stand der Technik bekannten Antriebssysteme sind generell in zwei Kategorien Antriebssysteme für einen Fahrzeuganhängerrangierantrieb unterteilbar, wobei sich die Kategorien in der Motoreinheit unterscheiden. Die erste Kategorie weist bürstenbehaftete Motoren auf, wohingegen die zweite Kategorie bürstenlose Motoren umfasst. Die zweite Kategorie mit den bürstenlosen Motoren zeichnet sich dadurch aus, dass sie im Gegensatz zu den Antriebssystemen mit bürstenbehafteten Motoren ein feineres Fahrverhalten aufweisen, welches es erlaubt, die Fahrzeuganhänger mit sehr langsamen Bewegungen besonders fein zu rangieren. Dieses bessere Fahrverhalten hat jedoch erhöhte Kosten aufgrund des bürstenlosen Motors sowie aufgrund einer aufwendigeren Elektronik zur Folge.

Ein Antriebssystem der eingangs genannten Art ist aus der EP 0 895 346 A2 bekannt.

Aus der EP 1 225 090 A2 ist ein Antriebssystem bekannt, bei dem, um eine Kurvenfahrt zu erzielen, die Antriebsmotoren intermittierend angesteuert werden. Die Antriebsmotoren können bürstenbehaftete Elektromotoren enthalten, deren Drehrichtung mittels Umpolung geändert werden kann.

Aus der DE 20 2009 005 524 U1 ist ein Antriebssystem bekannt, bei dem die Antriebseinheiten an die anzutreibenden Ränder angeschwenkt werden können. In den Antriebseinheiten kann ein selbsthemmendes Getriebe verwendet werden.

Aus der EP 1 790 555 A1 ist ein Antriebssystem bekannt, bei dem bei einer Kurvenfahrt die Motoren kurzzeitig rückwärts angesteuert werden, um ein Verspannen der Räder einer Tandemachse zu verhindern.

Es ist Aufgabe der Erfindung, ein Antriebssystem für einen Fahrzeuganhängerrangierantrieb zu schaffen, der das bessere Fahrverhalten eines Antriebssystems mit bürstenlosem Motor aufweist und dennoch günstig und einfach zu realisieren ist.

Die Aufgabe wird erfindungsgemäß durch ein Antriebssystem für einen Fahrzeuganhängerrangierantrieb gelöst, mit zumindest einer Motoreinheit und einer Spannungsquelle zur Versorgung der Motoreinheit, wobei die Motoreinheit einen bürstenbehafteten elektrischen Motor mit Motorwelle und eine Motorsteuerung umfasst, welche eine Drehzahlerfassungseinheit zum Erfassen der Drehzahl der Motorwelle und eine Steuer- und Regeleinheit für den Motor aufweist, insbesondere für dessen Spannungsversorgung. Der Grundgedanke der Erfindung ist es, ein Antriebssystem mit bürstenbehaftetem elektrischen Motor derart weiterzuentwickeln, dass er bei Bedarf dasselbe feine, sehr langsame Fahrverhalten aufweist, wie es von Antriebssystemen mit bürstenlosen Motoren bekannt ist. Hierzu wird die Drehzahl der Motorwelle von der Drehzahlerfassungseinheit erfasst und an die Motorsteuerung übermittelt, wobei die Motorsteuerung über die Steuer- und Regeleinheit die Spannungsaufnahme des Motors derart regelt, dass ein sehr geringer Drehzahlwert des Motors erreicht werden kann. Hierzu variiert die Steuer- und Regeleinheit insbesondere die Spannungsversorgung des bürstenbehafteten elektrischen Motors. Über die Pulsweitenmodulation kann die Drehzahl des Motors entsprechend niedrig gesteuert bzw. geregelt werden, da die Spannung am Motor dem Produkt der Betriebsspannung und dem Tastverhältnis entspricht. Mittels des PWM-Signals kann der Motor entsprechend sanft angesteuert werden, wobei dies frequenzabhängig ist. Indem beim Betrieb des Antriebssystems in der Ebene höchstens 90 %, insbesondere höchstens 80 %, der maximalen PWM benutzt wird, wird erreicht, dass eine Reserve vorhanden ist, wodurch auch bei einer Steigung die Drehzahl des Motors konstant gehalten werden kann.

Die Drehzahl kann direkt an der Motorwelle erfasst und geregelt werden. Dies hat zur Folge, dass kurze Stromleitungen verwendet werden können, wodurch die hohen Schaltströme, welche beim Ansteuern des Motors auftreten, nicht zu Problemen hinsichtlich der elektromagnetischen Verträglichkeit (EMV) führen.

Gemäß einem weiteren Aspekt der Erfindung ist vorgesehen, dass die Motorsteuerung eine Schaltung umfasst, die zumindest einen als Transistor ausgebildeten Schalter aufweist, insbesondere einen MOSFET oder einen PROFET. Über den in der Schaltung vorgesehenen Transistor kann die Spannungs- bzw. Stromstärkenregelung des Motors erfolgen, wobei der Transistor mit dem vom PWM-Generator erzeugten PWM-Signal angesteuert wird bzw. die Signale einkoppelt, um die Spannungsversorgung des Motors entsprechend zu steuern bzw. zu regeln.

Insbesondere umfasst die Schaltung zusätzlich zumindest einen Relais-Schalter, wobei der Relais-Schalter die Stromrichtung durch den Motor steuern bzw. regeln kann. Mittels des Relais-Schalters ist es möglich, dass sich der Motor des Antriebssystems sowohl in Vorwärts- als auch in Rückwärtsrichtung drehen kann, was sich entsprechend auf die Antriebsrolle des Fahrzeuganhängerrangierantriebs auswirkt. Ein weiterer Vorteil der Ausbildung der Schaltung mit einem mechanischen Schalter, wie dem Relais-Schalter, sowie einem HalbleiterSchalter, wie dem Transistor, ist es, dass die Ausfallsicherheit über die zwei unterschiedlichen Technologien vergrößert wird.

Gemäß einem weiteren Aspekt der Erfindung ist vorgesehen, dass die Drehzahlerfassungseinheit ein Kodierer ist, der direkt auf der Motorwelle angeordnet ist. Auf diese Weise werden längere Leitungen verhindert, da der Kodierer direkt an der Motorwelle angeordnet ist. Der Kodierer kann dabei die Drehzahl der Motorwelle optisch, magnetisch oder mechanisch erfassen und in ein elektrisches Signal umwandeln, welches von der Motorsteuerung entsprechend ausgewertet wird.

Ein weiterer Aspekt der Erfindung sieht ein Sicherheitselement vor, insbesondere einen Schalter, der in der Spannung führenden Leitung zwischen der Spannungsquelle und der Motoreinheit angeordnet ist. Hiermit ist die Sicherheit des Antriebssystems erhöht, da die Spannungsversorgung zu dem Motor in einem entsprechenden Notfall unterbrochen werden kann.

Insbesondere ist eine Zentraleinheit vorgesehen, die mit der Motoreinheit verbunden ist, insbesondere mit der Motorsteuerung. Über die Zentraleinheit kann die Motorsteuerung mit weiteren Steuerungssystemen verbunden sein und mit diesen kommunizieren.

Gemäß einem weiteren Aspekt der Erfindung kann die Zentraleinheit die Motoreinheit freischalten, insbesondere über ein PWM-Signal. Dieses Freigabesignal kann als sogenanntes Killswitch-Signal ausgebildet sein, wodurch die Zentraleinheit die komplette Motoreinheit ein- und ausschaltet.

Insbesondere ist die Zentraleinheit über einen LIN-Datenbus mit der Motorsteuerung verbunden. Der LIN-Datenbus stellt eine Vernetzung der Zentraleinheit mit der Motorsteuerung dar, wodurch Kommandos der Zentraleinheit an die Motorsteuerung übertragen werden können. Ferner können von der Motorsteuerung über den LIN-Datenbus auch Daten an die Zentraleinheit geschickt werden, beispielsweise Ist-Drehzahl, Stromaufnahme, Spannung usw., die für weitere Steuerungssysteme verwendet werden können. Der LIN-Datenbus stellt dabei eine besonders kostengünstige Kommunikation dar.

Gemäß einem weiteren Aspekt der Erfindung ist ein Getriebe vorgesehen, insbesondere ein selbsthemmendes Getriebe oder ein Zahnradgetriebe mit zusätzlicher Haltebremse. Über das Getriebe kann das von dem Motor erzeugte Drehmoment übersetzt werden, wodurch sich ein unterschiedliches Drehmoment an einer Antriebsrolle des Fahrzeuganhängerrangierantriebs im Vergleich zum Motordrehmoment ergibt.

Ein weiterer Aspekt der Erfindung sieht vor, dass die Motorsteuerung einen Mikrocontroller aufweist. Der Mikrocontroller kann dabei derart ausgebildet sein, dass er den PWM-Generator, eine Datenverarbeitungseinheit, welche die Daten des LIN-Datenbusses verarbeitet, sowie eine Auswerteeinheit umfasst, die die Daten der Drehzahlerfassungseinheit empfängt und an die Zentraleinheit sendet sowie die Kommandierung der Zentraleinheit dekodiert und weiterleitet. Der Mikrocontroller stellt damit das zentrale Element der Motorsteuerung dar.

Gemäß einem weiteren Aspekt der Erfindung umfasst das Antriebssystem eine Schwenkansteuerung zum Schwenken einer Antriebsrolle an ein anzutreibendes Rad. Das Anschwenken der Antriebsrolle erfolgt somit auch elektrisch und nicht mechanisch. Die Schwenkansteuerung kann dabei ebenfalls mit dem Mikrocontroller oder direkt mit der Zentraleinheit verbunden sein.

Weitere Vorteile und Aspekte der Erfindung ergeben sich aus der folgenden Beschreibung und der Zeichnungen, auf die Bezug genommen wird.

Die Zeichnungen zeigen:
- Figur 1 eine schematische Anordnung des erfindungsgemäßen Antriebssystems, und
- Figur 2 eine Ersatzschaltung für den Relais-Umschalter.

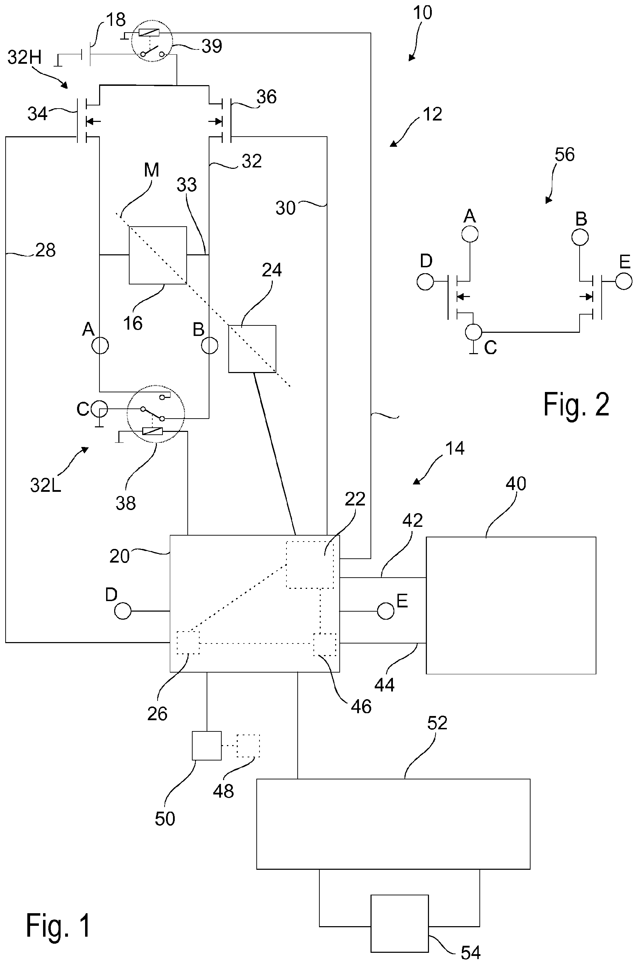

In Figur 1 ist ein Antriebssystem 10 schematisch gezeigt, das unter anderem eine Motoreinheit 12 umfasst. Die Motoreinheit 12 weist eine Motorsteuerung 14 sowie einen Motor 16 mit Motorwelle M auf. Bei dem Motor 16 handelt es sich um einen bürstenbehafteten elektrischen Motor, welcher von einer Spannungsquelle 18 versorgt wird, die ebenfalls Teil des Antriebssystems 10 ist.

Die Motorsteuerung 14 weist als zentralen Bestandteil einen Mikrocontroller 20 auf, welcher unter anderem eine Steuer- und Regeleinheit 22 umfasst. Die Motorsteuerung 14 weist ferner eine Drehzahlerfassungseinheit 24 auf, welche als Kodierer bzw. Encoder ausgebildet ist und direkt auf der Motorwelle M (gestrichelt dargestellt) angeordnet ist. Über die Drehzahlerfassungseinheit 24 wird die Drehzahl der Motorwelle M erfasst, wobei dies typischerweise optisch, magnetisch oder mechanisch geschieht. Die entsprechend erfassten Daten werden von der Drehzahlerfassungseinheit 24 an den Mikrocontroller 20 bzw. die Steuer- und Regeleinheit 22 geleitet.

Die Motorsteuerung 14 steuert bzw. regelt zudem über die Steuer- und Regeleinheit 22 sowie einen PWM-Generator 26 die Spannungsversorgung des Motors 16 durch die Spannungsquelle 18. Hierzu ist die Steuer- und Regeleinheit 22 mit dem PWM-Generator 26 verbunden. Die vom PWM-Generator 26 erzeugten PWM-Signale können von der Steuer- und Regeleinheit 22 entsprechend gesteuert bzw. geregelt werden, insbesondere das Tastverhältnis. Die Steuerung bzw. Regelung geschieht dabei in Abhängigkeit von der von der Drehzahlerfassungseinheit 24 erfassten Drehzahl der Motorwelle M sowie dem gewünschten Antriebsverhalten des Antriebssystems 10.

Die vom PWM-Generator 26 erzeugten PWM-Signale laufen über Verbindungsleitungen 28, 30 zu einer Schaltung 32, die ähnlich einer Brückenschaltung ausgebildet ist. Die Schaltung 32 verbindet den Motor 16, der in einem Brückenzweig 33 angeordnet ist, mit der Spannungsquelle 18 sowie der Motorsteuerung 14 an sich.

Die Schaltung 32 ist in der gezeigten Ausführungsform aus zwei Transistorschaltern 34, 36 an der HighSide 32H sowie einem Relais-Schalter 38 an der LowSide 32L ausgebildet, wobei der Relais-Schalter 38 ein Relais-Umschalter ist.

Die beiden Transistorschalter 34, 36 können dabei als MOSFETs bzw. PROFETs ausgebildet sein, wobei sie die vom PWM-Generator 26 erzeugten PWM-Signale derart umwandeln bzw. einkoppeln, dass die Spannungsversorgung des Motors 16 entsprechend dem Tastverhältnis geregelt wird, sodass dessen Geschwindigkeit über die PWM-Signale gesteuert bzw. geregelt ist.

Hierdurch ist es möglich, dass der Motor 16 langsam und fein betrieben wird, sodass das gesamte Antriebsverhalten des Antriebssystems 10 bzw. das Fahrverhalten des Fahrzeuganhängerrangierantriebs entsprechend fein ist und demjenigen eines bürstenlosen Motors entspricht.

Bei den dafür vorgesehenen PWM-Signalen kann es sich um mittelfrequente PWM-Signale handeln.

Der in der Schaltung 32 angeordnete mechanische Relais-Schalter 38 dient dazu, die Stromrichtung innerhalb der Schaltung 32 umzukehren, sodass der elektrische Motor 16 in beide Richtungen betreibbar ist. Hierdurch ist es möglich, dass das Antriebssystem 10 eine hier nicht dargestellte Antriebsrolle in beide Richtungen antreiben kann, sodass der Anhänger bzw. das von der Antriebsrolle angetriebene Anhängerrad sowohl vorwärts als auch rückwärts rangiert werden kann.

Aufgrund der Ausbildung der Schaltung 32 mit Silizium-Schaltern, wie den Transistoren 34, 36, sowie einem mechanischen Schalter, wie dem Relais-Schalter 38, ist die Betriebssicherheit der Schaltung 32 und somit der gesamten Motorsteuerung 14 aufgrund der angewandten unterschiedlichen Technologien erhöht. Ein Klemmen des mechanischen Relais-Schalters 38 kann durch das Abschalten der Transistoren 34, 36 aufgefangen werden sowie ein Durchbrennen der Transistoren 34, 36 durch ein Öffnen des Relais-Schalters 38.

In der Schaltung 32 ist zudem zwischen dem Motor 16 und der Spannungsquelle 18 ein weiteres Sicherheitselement 39 angeordnet, welches als Schalter ausgebildet ist und den Motor 16 von der Spannungsquelle 18 im Bedarfsfall vollständig trennen kann.

Das Sicherheitselement 39 kann auch als MOSFET bzw. PROFET ausgebildet sein.

Außerdem kann ein unerwünschtes Drehen des Motors 16 bereits von der Drehzahlerfassungseinheit 24 detektiert werden. Diese Information kann dann an die Motorsteuerung 14 bzw. die Steuer- und Regeleinheit 22 gesendet werden, sodass die Motoreinheit 12 ausgeschaltet wird.

Das Antriebssystem 10 umfasst ferner eine Zentraleinheit 40, die mit der Motoreinheit 12, insbesondere dem Mikrocontroller 20, verbunden ist. Die Zentraleinheit 40 kann dabei die gesamte Motoreinheit 12 über eine Freigabeleitung 42 freischalten. Bei dem Freigabesignal kann es sich um ein sogenanntes Killswitch-Signal handeln, welches ebenfalls als ein PWM-Signal ausgebildet ist.

Die Zentraleinheit 40 ist darüber hinaus mit dem Mikrocontroller 20 über einen LIN-Datenbus 44 verbunden, sodass die Zentraleinheit 40 den Mikrocontroller 20 und somit die Motorsteuerung 14 mit Daten versorgen kann. Hierzu weist der Mikrocontroller 20 bzw. die Motorsteuerung 14 eine Datenverarbeitungseinheit 46 auf, welche die von der Zentraleinheit 40 gesendeten Daten über den LIN-Datenbus 44 empfängt und entsprechend verarbeitet.

Der Mikrocontroller 20 kann darüber hinaus derart ausgebildet sein, dass er über die Datenverarbeitungseinheit 46 auch Daten an die Zentraleinheit 40 sendet, welche für andere Steuerungssysteme genutzt werden können. Bei diesen Daten kann es sich beispielsweise um die Ist-Drehzahl der Motorwelle M, die Stromaufnahme des Motors 16, die aktuelle Motorspannung oder ähnliche Parameter des Antriebssystems 10 handeln. Unter anderem hierzu ist der Mikrocontroller 20 mit den entsprechenden Datenerfassungsgeräten wie der Drehzahlerfassungseinheit 24 verbunden.

Ferner kann das Antriebssystem 10 ein Getriebe 48 aufweisen, über welches das vom Motor 16 erzeugte Drehmoment umgewandelt wird, sodass ein übersetztes Drehmoment vom Antriebssystem 10 auf die hier nicht dargestellte Antriebsrolle übertragen wird. Das Getriebe 48 ist dazu zwischen Motor 16 und Antriebsrolle angeordnet.

Bei dem Getriebe 48 kann es sich um ein selbsthemmendes Getriebe oder ein Zahnradgetriebe mit einer zusätzlichen Haltebremse 50 handeln, die den Motor 16 bremsen kann. Das Zahnradgetriebe kann insbesondere als ein Stirnradgetriebe ausgebildet sein.

Alternativ kann der Motor 16 auch über ein Kurzschließen der Schaltung 32 gebremst werden.

Das Antriebssystem 10 kann darüber hinaus neben der Motorsteuerung 14 eine Schwenkansteuerung 52 umfassen, welche für das Anschwenken der hier nicht dargestellten Antriebsrolle an ein nicht dargestelltes anzutreibendes Anhängerrad zuständig ist. Die Schwenkansteuerung 52 ist in der gezeigten Ausführungsform ebenfalls mit dem Mikrocontroller 20 verbunden, sodass die Schwenkansteuerung 52 Signale von dem Mikrocontroller 20 erhält und einen Schwenkmotor 54 entsprechend antreibt.

Alternativ kann die Schwenkansteuerung 52 auch direkt mit der Zentraleinheit 40 verbunden sein.

Der in der Ausführungsform gezeigte Mikrocontroller 20 umfasst die Steuer- und Regeleinheit 22, den PWM-Generator 26 sowie die Datenverarbeitungseinheit 46. Der Mikrocontroller 20 erzeugt somit über den PWM-Generator 26 die Steuer- und Regelsignale für die Schaltung 32, die eine derart sanfte Drehzahlregelung eines bürstenbehafteten elektrischen Motors 16 ermöglichen. Ferner dekodiert der Mikrocontroller 20 die Signale, welche von der Zentraleinheit 40 gesendet werden und schickt bzw. empfängt über die Datenverarbeitungseinheit 46 und den LIN-Datenbus 44 Daten an die Zentraleinheit 40, die für weitere Systeme benutzt werden können.

Die in dem Mikrocontroller 20 verwirklichten Einheiten können auch als separate Einheiten ausgebildet sein, die untereinander verbunden sind.

Die in Figur 1 gezeigte Ausführungsform der Schaltung 32 stellt nur eine beispielhafte Ausgestaltung der Schaltung 32 dar.

Bei der Schaltung 32 kann es sich auch um eine Vollbrücke bzw. H-Schaltung handeln, die an der HighSide 32H zwei Transistoren und an der LowSide 32L zwei Relais-Schalter aufweist oder um eine Vollbrücke bzw. H-Schaltung, die an der LowSide 32L zwei Transistoren und an der HighSide 32H zwei Transistoren aufweist.

In Figur 2 ist eine Ersatzschaltung 56 gezeigt, welche mit den Ersetzungspunkten A-E aus der Figur 1 verbunden wird, sodass die Schaltung 32 mit der Ersatzschaltung 56 eine Vollbrücke mit insgesamt vier Transistoren ist.

Die beiden Transistoren aus der Ersatzschaltung 56 sind dann an der LowSide 32L der Schaltung 32 zugeordnet und steuern die Stromrichtung durch den Motor 16. Hierzu werden die in der Ersatzschaltung 56 angeordneten Transistoren von der Motorsteuerung 14 entsprechend angesteuert.

Ebenfalls kann die Schaltung 32 nur einen Transistor an der HighSide 32H aufweisen, der von der Motorsteuerung 14 über PWM-Signale entsprechend angesteuert wird, und ein Wechselrelais-Schalter an der LowSide 32L zum Wechseln der Stromrichtung und damit der Drehrichtung des Motors 16.

Die in der Schaltung 32 sowie der Ersatzschaltung 56 gezeigten MOSFET-Transistoren sind nur beispielsweise gezeigt. Sie können sowohl normal leitend als auch normal sperrend sein sowie vom Typ n-Kanal oder p-Kanal.

Mit der Schaltung 32 ist es an sich auch möglich, beim Bremsen erzeugte Energie zurückzugewinnen, wobei diese in eine hier nicht dargestellte Rekuperationseinrichtung oder direkt in die Spannungsquelle 18 eingespeist werden kann, um diese aufzuladen.

Generell ist mit dem erfindungsgemäßen Antriebssystem 10 ein günstiges Antriebssystem für einen Fahrzeuganhängerrangierantrieb geschaffen, welches sowohl ein feines Fahrverhalten aufweist sowie günstig herzustellen ist. Zudem ist die Ausfallwahrscheinlichkeit aufgrund der einfach konzipierten Elektronik gering.

## Patentansprüche

1. Antriebssystem (10) für einen Fahrzeuganhängerrangierantrieb, mit zumindest einer Motoreinheit (12) und einer Spannungsquelle (18) zur Versorgung der Motoreinheit (12), wobei die Motoreinheit (12) einen bürstenbehafteten elektrischen Motor (16) mit Motorwelle (M) und eine Motorsteuerung (14) umfasst, welche eine Drehzahlerfassungseinheit (24) zum Erfassen der Drehzahl der Motorwelle (M) und eine Steuer- und Regeleinheit (22) für den Motor (14) aufweist, insbesondere für dessen Spannungsversorgung, wobei die Motorsteuerung (14) einen PWM-Generator (26) umfasst, sodass die von der Spannungsquelle (18) abgegebene Spannung über ein PWM-Signal geregelt ist, **dadurch gekennzeichnet, dass** beim Betrieb des Antriebssystems (10) in der Ebene höchstens 90%, insbesondere höchstens 80%, der maximalen PWM benutzt werden kann.

2. Antriebssystem (10) nach Anspruch 1, **dadurch gekennzeichnet, dass** die Motorsteuerung (14) eine Schaltung (32) umfasst, die zumindest einen als Transistor (34, 36) ausgebildeten Schalter aufweist, insbesondere einen MOSFET oder einen PROFET.

3. Antriebssystem (10) nach Anspruch 2, **dadurch gekennzeichnet, dass** die Schaltung (32) zusätzlich zumindest einen Relais-Schalter (38) umfasst, wobei der Relais-Schalter (38) die Stromrichtung durch den Motor (16) steuern bzw. regeln kann.

4. Antriebssystem (10) nach einem der vorhergehenden Ansprüche, **dadurch gekennzeichnet, dass** die Drehzahlerfassungseinheit (32) ein Kodierer ist, der direkt auf der Motorwelle (M) angeordnet ist.

5. Antriebssystem (10) nach einem der vorhergehenden Ansprüche, **dadurch gekennzeichnet, dass** ein Sicherheitselement (39), insbesondere ein Schalter, in der Spannung führenden Leitung zwischen der Spannungsquelle (18) und der Motoreinheit (12) angeordnet ist.

6. Antriebssystem (10) nach einem der vorhergehenden Ansprüche, **dadurch gekennzeichnet, dass** eine Zentraleinheit (40) vorgesehen ist, die mit der Motoreinheit (12) verbunden ist, insbesondere mit der Motorsteuerung (14).

7. Antriebssystem (10) nach Anspruch 6, **dadurch gekennzeichnet, dass** die Zentraleinheit (40) die Motoreinheit (12) freischaltet, insbesondere über ein PWM-Signal.

8. Antriebssystem (10) nach Anspruch 6 oder 7, **dadurch gekennzeichnet, dass** die Zentraleinheit (40) über einen LIN-Datenbus (44) mit der Motorsteuerung (14) verbunden ist.

9. Antriebssystem (10) nach einem der vorhergehenden Ansprüche, **dadurch gekennzeichnet, dass** ein Getriebe (48) vorgesehen ist, insbesondere ein selbsthemmendes Getriebe oder ein Zahnradgetriebe mit zusätzlicher Haltebremse (50).

10. Antriebssystem (10) nach einem der vorhergehenden Ansprüche, **dadurch gekennzeichnet, dass** die Motorsteuerung (14) einen Mikrocontroller (20) aufweist.

11. Antriebssystem (10) nach einem der vorhergehenden Ansprüche, **dadurch gekennzeichnet, dass** das Antriebssystem (10) eine Schwenkansteuerung (52) zum Schwenken einer Antriebsrolle an ein anzutreibendes Rad umfasst.

## Claims

1. A drive system (10) for a vehicle trailer maneuvering drive, comprising at least one motor unit (12) and a voltage source (18) for supplying the motor unit (12), the motor unit (12) comprising a brushed electric motor (16) with a motor shaft (M) and a motor controller (14) which includes a speed detection unit (24) for detecting the speed of the motor shaft (M) and a control and regulating unit (22) for the motor (14), in particular for the voltage supply thereof, the motor controller (14) comprising a PWM generator (26), so that the voltage output by the voltage source (18) is controlled via a PWM signal, **characterized in that** when operating the drive system (10) on level ground, not more than 90%, in particular not more than 80% of the maximum PWM can be used.

2. The drive system (10) according to claim 1, **characterized in that** the motor controller (14) comprises a circuit (32) which includes at least one switch formed as a transistor (34, 36), in particular a MOSFET or a PROFET.

3. The drive system (10) according to claim 2, **characterized in that** the circuit (32) additionally comprises at least one relay switch (38), the relay switch (38) being adapted to control or regulate the current direction through the motor (16).

4. The drive system (10) according to any of the preceding claims, **characterized in that** the speed detection unit (32) is an encoder which is arranged directly on the motor shaft (M).

5. The drive system (10) according to any of the preceding claims, **characterized in that** a safety element (39), in particular a switch, is arranged in the voltage-carrying line between the voltage source (18) and the motor unit (12).

6. The drive system (10) according to any of the preceding claims, **characterized in that** a central unit (40) is provided which is connected with the motor unit (12), in particular with the motor controller (14).

7. The drive system (10) according to claim 6, **characterized in that** the central unit (40) clears the motor unit (12), in particular via a PWM signal.

8. The drive system (10) according to claim 6 or 7, **characterized in that** the central unit (40) is connected with the motor controller (14) via a LIN data bus (44).

9. The drive system (10) according to any of the preceding claims, **characterized in that** a transmission (48) is provided, in particular a self-locking transmission or a gearwheel transmission with additional holding brake (50).

10. The drive system (10) according to any of the preceding claims, **characterized in that** the motor controller (14) includes a microcontroller (20).

11. The drive system (10) according to any of the preceding claims, **characterized in that** the drive system (10) comprises a swivel actuator (52) for swiveling a drive roller against a wheel to be driven.

## Revendications

1. Système d'entraînement (10) pour un entraînement de manoeuvre de remorque de véhicule, comportant au moins une unité moteur (12) et une source de tension (18) pour l'alimentation de l'unité moteur (12), l'unité moteur (12) comprenant un moteur électrique (16) à balais qui présente un arbre de moteur (M) et une commande de moteur (14) laquelle présente une unité de détection de vitesse de rotation (24) pour la détection de la vitesse de rotation de l'arbre de moteur (M) et une unité de commande et de réglage (22) pour le moteur (14), en particulier pour l'alimentation en tension de celui-ci, la commande de moteur (14) comprenant un générateur PWM (26) de sorte que la tension en sortie de la source de tension (18) est réglée par un signal PWM, **caractérisé en ce que** lors du fonctionnement du système d'entraînement (10) dans le plan, 90 % au maximum, en particulier 80 % au maximum de la PWM maximale peuvent être utilisés.

2. Système d'entraînement (10) selon la revendication 1, **caractérisé en ce que** la commande de moteur (14) comprend un circuit (32) qui présente au moins un commutateur réalisé sous forme de transistor (34, 36), en particulier un MOSFET ou un PROFET.

3. Système d'entraînement (10) selon la revendication 2, **caractérisé en ce que** le circuit (32) comprend en outre au moins un commutateur à relais (38), le commutateur à relais (38) étant apte à commander ou à régler le sens du courant à travers le moteur (16).

4. Système d'entraînement (10) selon l'une des revendications précédentes, **caractérisé en ce que** l'unité de détection de vitesse de rotation (32) est un codeur qui est agencé directement sur l'arbre de moteur (M).

5. Système d'entraînement (10) selon l'une des revendications précédentes, **caractérisé en ce qu'**un élément de sécurité (39), en particulier un commutateur est agencé dans la ligne conductrice de tension entre la source de tension (18) et l'unité moteur (12).

6. Système d'entraînement (10) selon l'une des revendications précédentes, **caractérisé en ce qu'**il est prévu une unité centrale (40) qui est reliée à l'unité moteur (12), en particulier à la commande de moteur (14).

7. Système d'entraînement (10) selon la revendication 6, **caractérisé en ce que** l'unité centrale (40) déconnecte l'unité moteur (12), en particulier par l'intermédiaire d'un signal PWM.

8. Système d'entraînement (10) selon la revendication 6 ou 7, **caractérisé en ce que** l'unité centrale (40) est reliée à la commande de moteur (14) par un bus de données LIN (44).

9. Système d'entraînement (10) selon l'une des revendications précédentes, **caractérisé en ce qu'**il est prévu une transmission (48), en particulier une transmission à blocage automatique ou une transmission par engrenage présentant un frein de maintien (50) supplémentaire.

10. Système d'entraînement (10) selon l'une des revendications précédentes, **caractérisé en ce que** la commande de moteur (14) présente un microcontrôleur (20).

11. Système d'entraînement (10) selon l'une des revendications précédentes, **caractérisé en ce que** le système d'entraînement (10) comprend un pilotage de pivotement (52) pour le pivotement d'un rouleau d'entraînement contre une roue à entraîner.
